# EUROPÄISCHE PATENTANMELDUNG

(11) **EP 2 070 996 A1**
(43) Veröffentlichungstag der Anmeldung: **17.06.2009**
(21) Anmeldenummer: 08021524.7
(22) Anmeldetag: 11.12.2008
(51) Int. Cl.: C09D 5/00, C09D 7/12, F16C 33/20

(54) **Gleitlack für ein Lagerelement**

(30) Priorität: 11.12.2007 AT 20052007
(71) Anmelder: Miba Gleitlager GmbH, 4663 Laakirchen (AT)
(72) Erfinder: Leonardelli, Georg, 4810 Gmunden (AT)
(74) Vertreter: Ofner, Clemens

(57) **Zusammenfassung**

Die Erfindung betrifft einen Gleitlack zur Herstellung einer Beschichtung auf einer tribologisch beanspruchten Fläche, umfassend zumindest ein Polymer, das eine Polymermatrix der Beschichtung bildet, oder zumindest eine Vorstufe des Polymers, die durch Härtung die Polymermatrix bildet, wobei die Molekülstruktur des Polymers oder der zumindest einen Vorstufe eine Hauptkette aus wiederkehrende Monomereinheiten aufweist oder die Vorstufe diese Monomereinheit ist, die einen Teil der Hauptkette darstellt, zumindest einen Festschmierstoff, gegebenenfalls zumindest einen festigkeitssteigernden Zusatzstoff, sowie zumindest ein Lösungsmittel. Zumindest die Hauptkette der Molekülstruktur oder der Hauptkettenteil weist ein voll konjugiertes Bindungssystem auf

## Beschreibung

Die Erfindung betrifft einen Gleitlack zur Herstellung einer Beschichtung auf einer tribologisch beanspruchten Fläche, umfassend zumindest ein Polymer, das eine Polymermatrix der Beschichtung bildet, oder zumindest eine Vorstufe des Polymers, die durch Polymerisation die Polymermatrix bildet, wobei die Molekülstruktur des Polymers oder der zumindest einen Vorstufe eine Hauptkette aus wiederkehrenden Monomereinheiten aufweist oder die Vorstufe diese Monomereinheit ist, die einen Teil der Hauptkette bildet, zumindest einen Festschmierstoff, ggf. zumindest einen festigkeitssteigernden Zusatzstoff, und zumindest ein Lösungsmittel, sowie weiters ein Lagerelement mit einem Stützelement und einer darauf angeordneten Polymerschicht, umfassend ein Polymer, zumindest einen Festschmierstoff und ggf. zumindest einen festigkeitssteigemden Zusatzstoff, wobei das Polymer eine aus Monomereinheiten gebildete Hauptkette aufweist, und wobei zwischen dem Stützelement und der Gleitschicht ggf. zumindest eine weitere, insbesondere metallische Schicht angeordnet ist.

Die Verwendung von Gleitlacken als Gleitschichten von Gleitlagern ist beispielsweise in der auf die Anmelderin zurückgehenden AT 501 878 A, auf die in diesem Zusammenhang verwiesen wird, bereits ausreichend dokumentiert.

Aufgrund der immer höher belastenden Motoren sind auch Gleitlager einer immer stärkeren Belastung unterworfen. Es wird daher ständig nach neuen Lösungen für die Herstellung von Gleitlagern gesucht, die diese Aufgaben erfüllen können.

Es ist daher Aufgabe vorliegender Erfindung einen Gleitlack bzw. ein Lagerelement bereit zu stellen, welcher bzw. welches verbesserte Gleiteigenschaften aufweist.

Diese Aufgabe der Erfindung wird durch den eingangs erwähnten Gleitlack gelöst, bei dem die Hauptkette der Molekülstruktur des Polymers oder der Teil der Hauptkette, welcher von den Monomereinheiten gebildet wird, ein voll konjugiertes Bindungssystem aufweist bzw. unabhängig hiervon durch das eingangs genannte Lagerelement bei dem die Polymerschicht aus einem Polymer gebildet ist, dessen Hauptkette ein voll konjugiertes Bindungssystem aufweist.

Im Zuge der Weiterentwicklung des der oben genannten AT 501 878 A zugrunde liegenden Gleitlackes konnte die Anmelderin überraschender Weise feststellen, dass Gleitlacke mit voll konjugierten Bindungssystemen zumindest in der Hauptkette eine deutliche Verbesserung bzgl. der Gleiteigenschaften, insbesondere des Verschleißes, wie dies im folgenden noch näher dargelegt wird, durch geringeren Abrieb aufweisen und das die Haftfestigkeit derartiger Gleitlacke auf metallischen Schichten von Lagerelementen, insbesondere Gleitlagern, größer ist, als dies bisher für Gleitlacke für diesen Verwendungszweck im Stand der Technik beschrieben worden ist. Die Hintergründe für diese Eigenschaftsverbesserung sind bislang noch nicht völlig geklärt, jedoch vermutet die Anmelderin, dass dies ursächlich mit dem konjugierten Bindungssystem und der damit über die Länge der Hauptkette im Wesentlichen gleichmäßigeren Ladungsverteilung der π-Elektronen im Molekül im Zusammenhang steht. Diese Elektronen weisen damit einen höheren Freiheitsgrad auf, als dies bei herkömmlichen Gleitlacken der Fall ist.

Unter Hauptkette wird im Sinne der Erfindung jener Teil der Molekülkette, d.h. Aneinanderreihung von Atomen, verstanden, welche durch die Verknüpfung der Monomereinheiten entsteht. Selbstverständlich können im Rahmen der Erfindung an diesen Monomereinheiten auch Seitenketten angeordnet sein, die jedoch bei derartigen Molekülstrukturen von Polymeren eine endliche Länge - im Vergleich zur Kettenlänge des Polymermoleküls selbst - aufweisen. Auch diese Seitenketten können in einer speziellen Ausführungsvariante der Erfindung an dem konjugierten Bindungssystem der Hauptkette teilnehmen, wodurch sich die Ladungsverteilung innerhalb des Polymermoleküls weiter vergleichmäßigen lässt.

Gemäß einer bevorzugten Ausführungsvariante ist vorgesehen, dass das Polymer oder die Vorstufe aus dem das Polymer hergestellt wird, zumindest annähernd eine fadenähnliche Molekülstruktur aufweist, mit einer bevorzugten Erstreckung in Längsrichtung, d. h. dass, sollten Seitenketten vorhanden sein, diese im Vergleich zur Hauptkette relativ kurzkettig ausgerührt sind, beispielsweise maximal 10 Kohlenstoffatome umfassen, sodass also dieses Polymer nicht in einer flächigen Vernetzung vorliegt, wodurch die Selbstschmierfähigkeit des Gleitlackes und damit dessen Gleiteigenschaften durch verringerte Kristallinität des Polymers weiter verbessert werden können.

Insbesondere haben sich Polymere ausgewählt aus einer Gruppe umfassend Polyamide, Polyimide, Polyamidimide als besonders vorteilhaft im Hinblick auf die Erfindung herausgestellt, obwohl dies aufgrund der vorhandenen Heteroatome widersprtichlich zu obiger Feststellung bezüglich der Ladungsverteilung zu sein scheint.

Der zumindest eine Festschmierstoff ist insbesondere ausgewählt aus einer Gruppe umfassend WS₂, MoS₂, Graphit, Sn, SnS und SnS2. Insbesondere diese Festschmierstoffe wirken sich vorteilhaft auf die Selbstschmierfähigkeit des Gleitlackes aus. Es können aber im Rahmen der Erfindung, wie dies im nachstehenden noch näher erläutert wird, auch andere Festschmierstoffe enthalten sein, ohne dass der Grundgedanke vorliegender Erfindung verlassen wird.

In bevorzugten Ausführungsvarianten des Gleitlackes enthält dieser WS₂ in einem Anteil, der ausgewählt ist aus einem Bereich mit einer unteren Grenze von 17 Gew.-% und einer oberen Grenze von 29 Gew.-%, Sn in einem Anteil, der ausgewählt ist aus einem Bereich mit einer unteren Grenze von 2 Gew.-% und einer oberen Grenze von 8 Gew.-% und Graphit in einem Anteil, der ausgewählt ist aus einem Bereich mit einer unteren Grenze von 12 Gew.-% und einer oberen Grenze von 23 Gew.-%, wobei den Rest das Polymer bildet bzw. eine Mischung aus SnS und SnS₂ in einem Anteil, der ausgewählt ist aus einem Bereich mit einer unteren Grenze von 17 Gew.-% und einer oberen Grenze von 29 Gew.-%, Sn in einem Anteil, der ausgewählt ist aus einem Bereich mit einer unteren Grenze von 2 Gew.-% und einer oberen Grenze von 8 Gew.-% und Graphit in einem Anteil, der ausgewählt ist aus einem Bereich mit einer unteren Grenze von 12 Gew.-% und einer oberen Grenze von 21 Gew.-%, und den Rest wiederum das Polymer bildet, oder MoS₂ in einem Anteil, der ausgewählt ist aus einem Bereich mit einer unteren Grenze von 17 Gew.-% und einer oberen Grenze von 29 Gew.-% und Graphit in einem Anteil, der ausgewählt ist aus einem Bereich mit einer unteren Grenze von 12 Gew.-% und einer oberen Grenze von 21 Gew.-%, wobei auch hier wiederum den Rest das Polymer bildet.

Das WS₂ kann auch in einem Anteil vorliegen, der ausgewählt ist aus einem Bereich mit einer unteren Grenze von 21 Gew.-% und einer oberen Grenze von 27 Gew.-%, Sn in einem Anteil, der ausgewählt ist aus einem Bereich mit einer unteren Grenze von 3 Gew.-% und einer oberen Grenze von 6 Gew.-% und Graphit in einem Anteil, der ausgewählt ist aus einem Bereich mit einer unteren Grenze von 15 Gew.-% und einer oberen Grenze von 18 Gew.-%, wobei den Rest das Polymer bildet, bzw. die Mischung aus SnS und SnS₂ in einem Anteil, der ausgewählt ist aus einem Bereich mit einer unteren Grenze von 22 Gew.-% und einer oberen Grenze von 26 Gew.-%, Sn in einem Anteil, der ausgewählt ist aus einem Bereich mit einer unteren Grenze von 3 Gew.-% und einer oberen Grenze von 6 Gew.-% und Graphit in einem Anteil, der ausgewählt ist aus einem Bereich mit einer unteren Grenze von 15 Gew.-% und einer oberen Grenze von 18 Gew.-%, wobei den Rest wiederum das Polymer bildet, oder MoS₂ in einem Anteil, der ausgewählt ist aus einem Bereich mit einer unteren Grenze von 19 Gew.-% und einer oberen Grenze von 25 Gew.-% und Graphit in einem Anteil, der ausgewählt ist aus einem Bereich mit einer unteren Grenze von 14 Gew.-% und einer oberen Grenze von 18 Gew.-%, wobei auch hier wiederum den Rest das Polymer bildet.

Diese Angaben zur Zusammensetzung sind jeweils bezogen auf den Feststoffgehalt des Gleitlackes.

Es sei an dieser Stelle darauf hingewiesen, dass sich die Angaben zur Zusammensetzung der Polymerschicht auf die trockene Schicht, d. h. ohne Lösungsmittel beziehen, bzw. Angaben mit Bezug auf den Feststoffgehalt so zu verstehen sind, dass damit die Zusammensetzung der festen Polymerschicht, d. h. also wiederum ohne Lösungsmittel, gemeint ist. Somit bedeutet "Feststoffgehalt" jenen Anteil am Gleitlack, der nach der Entfernung des Lösungsmittels an dem zu beschichtenden Substrat verbleibt.

Wie anhand der Beispiele im Folgenden dargelegt wird, weisen diese Zusammensetzungen im Vergleich zu Gleitlacken aus dem Stand der Technik deutlich verbesserte Eigenschaften bezüglich der Abriebfestigkeit auf.

Das erfindungsgemäße Lagerelement, insbesondere das Gleitlager, ist mit diesem Gleitlack versehen und können daher die voranstehenden Ausführungen diesbezüglich übernommen werden.

Insbesondere weist das Lagerelement als weitere Schicht eine Lagermetallschicht aus einem Bronze- oder Messingwerkstoff auf, die die Gleitlackschicht, d.h. die Polymerschicht trägt.

Zum besseren Verständnis der Erfindung wird diese anhand der nachfolgenden Figuren näher erläutert.

Es zeigen jeweils in stark schematisch vereinfachter Darstellung:
- Fig. 1: ein erfindungsgemäßes Lagerelement in Form einer Gleitlagerhalbschale in Schrägansicht;
- Fig. 2: eine graphische Gegenüberstellung der Abriebfestigkeit des erfindungsgemäßen Gleitlackes verglichen mit Gleitlacken aus dem Stand der Technik.

Einführend sei festgehalten, dass die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen sind.

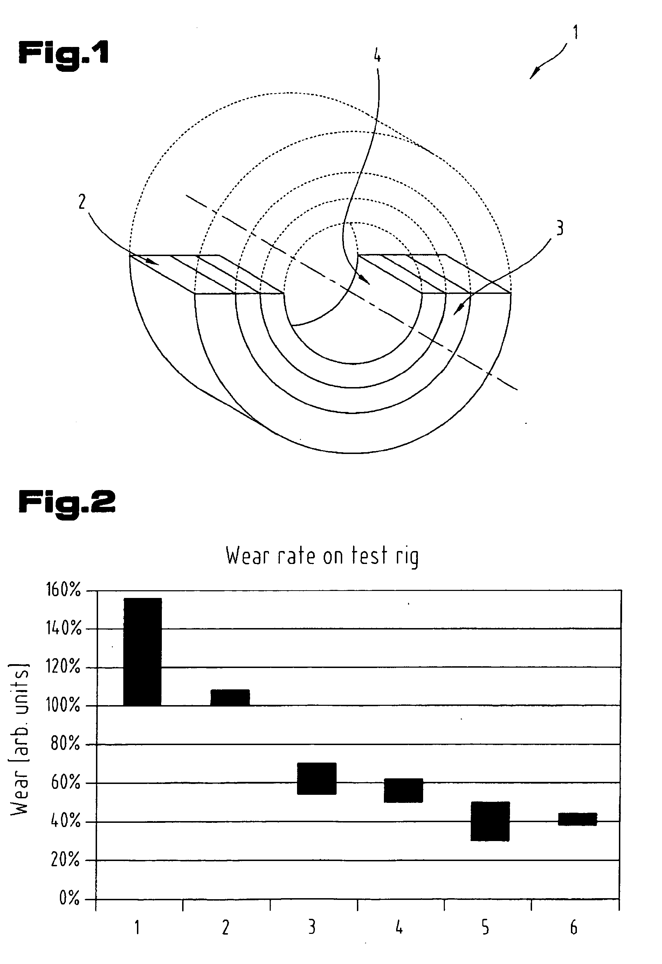

Das Lagerelement 1 nach Fig. 1 ist aus einem Stützelement 2, einer Lagermetallschicht 3 sowie einer Polymerschicht 4 als Lauf- bzw. Gleitschicht oder Einlaufschicht aufgebaut. Es können auch weitere herkömmliche Schichten, wie z.B. Binde- und/oder Diffusionssperrschichten angeordnet werden, wie dies aus dem Stand der Technik bekannt ist.

Das Stützelement 2 besteht üblicherweise aus Stahl, kann aber selbstverständlich auch aus vergleichbaren Werkstoffen bestehen, mit welchen die selbe bzw. eine ähnliche Funktion, nämlich die Bereitstellung der mechanischen Festigkeit des Lagerelementes 1, realisiert werden kann. Die mechanische Festigkeit des gesamten Lagerelementes 1 ist dabei abhängig vom jeweiligen Einsatzgebiet, sodass beispielsweise auch verschiedenste Kupferlegierungen, wie z.B. Messing, Bronzen, Verwendung finden können. Zudem wird durch den Stützkörper 2 eine gewisse Formstabilität gewährleistet.

Die Lagermetallschicht 3 (bzw. Laufschicht) ist durch eine Lagermetalllegierung gebildet. Diese besteht bei diesem Ausführungsbeispiel aus einer Kupferlegierung, insbesondere einer Bronze oder Messing.

Prinzipiell können auch andere aus dem Stand der Technik bekannte Lagermetalllegierungen verwendet werden, beispielsweise Legierungen auf Wismut-, Indium-, Blei-, Kupfer-, Aluminiumbasis. Es sei hierzu u.a. auf die AT 501 878 A verwiesen.

Die Lagermetallschicht 3 ist dem Stand der Technik entsprechend aufgebracht.

Erfindungsgemäß besteht die Polymerschicht 4 aus einem Polymer dessen Hauptkette der Molekülstruktur ein voll konjugiertes Bindungssystem aufweist. Dieses Polymer kann ausgewählt sein aus einer Gruppe umfassend Polyamide, Polyimide, Polyamidimide, bspw. aromatische Vertreter dieser Harze, wasserstofffreie Polyimidharze, Pyromellithimide, wie z.B. Poly-triazo-Pyromellithimide, fluorhältige Harze, Polystyren, Polymethylmethacrylat, Poly(p)phenylen, Polythiophen, Polyphenylenvinylen. Es können auch Copolymere, beispielsweise alternierende oder statistische Copoylmere, verwendet werden, ebenso ist es möglich, eine Mischung aus diesen Harztypen einzusetzen.

Als Polyamid kann beispielsweise eine Polyamid-Amidsäure verwendet werden mit AmidSäure-Einheiten der Summenformel - (NHCO) (C₆H₆) (COOH) (CONHR) -. Diese Amid-Amidsäure-Einheiten können mit Amid-Imid-Einheiten der Summenformel - (NHCO) (C₆H₆) (C₂O₂NR) - zur Ausbildung eines Polyamidimids polymerisiert sein. Unter Polymerisation sind dabei im Sinne der Erfindung auch Polykondensationen und Polyadditionen zu verstehen. Der Rest kann bei beiden Harztypen insbesondere ein aromatischer Rest sein, bspw. ein Phenylrest. Es können auch aromatische Reste verwendet werden, die mehrere Ringe umfassen, z.B. zwei Phenylringe, die über Heteroatome, wie z.B. Sauerstoff oder Stickstoff, miteinander verbunden sind. Diese Reste können wiederum substituiert sein, d. h. Seitenketten aufweisen. Jedenfalls muss dieser Rest im Sinne der Erfindung ein konjugiertes Bindungssystem aufweisen, um das konjugierte Bindungssystem der Hauptkette des Harzes nicht zu zerstören, da der Rest in der Hauptkette angeordnet ist. Für Reste die Nebenketten des Harzes bilden ist es nicht zwingend erforderlich, dass diese konjugierte Bindungssysteme aufweisen, wenngleich dies für die Erfindung von Vorteil ist.

Die Polyamid-Amidsäure kann durch Reaktion von Trimellithsäure oder einen Derivat hiervon oder einem Trimellithsäurehalogenid, z.B. einem Säurechlorid, mit zumindest einem aromatischen Diamin, z.B. p-Phenylendiamin, hergestellt werden. Beispiele für aromatische Diamine sind auch in der US 3, 494, 890 A oder US 4, 016, 140 A angeführt, auf die diesbezüglich hiermit Bezug genommen wird. Die Reaktion kann z.B. in N-Methylpyrrolidon durchgeführt werden. Das Molekulargewicht der Polymid-Amidsäure kann zwischen 1500 und 20.000 g/mol betragen.

Die Amid-Imid-Einheit kann durch Polykondensation von aromatischen Tricarbonsäureanhydriden, z.B. Trimellithsäureanhydrid, bzw. den Chloriden dieser Carbonsäuren, mit Diisocyanaten bzw. Diaminen hergestellt werden. Die Polykondensation erfolgt in Lösung, z.B. in 1-Methyl-2-pyrrolidinon

Das Molverhältnis der Amid-Amidsäure-Einheiten zu den Amid-Imid-Einheiten kann im Bereich zwischen 20: 1 bis 4: 1 liegen.

Das Harz kann in zumindest einem Lösungsmittel vorliegen, beispielsweise einem organischen Lösungsmittel, wie z.B. Xylol, N- Methylpyrrolidon, ein Alkohol, oder Wasser, wodurch die Verarbeitbarkeit erleichtert wird. Der Lösungsmittelanteil kann dabei ausgewählt sein aus einem Bereich mit einer unteren Grenze von 30 Gew.-% und einer oberen Grenze von 80 Gew.-%, insbesondere mit einer unteren Grenze von 40 Gew.-% und einer oberen Grenze von 70 Gew.-%, vorzugsweise mit einer unteren Grenze von 50 Gew.-% und einer oberen Grenze von 65 Gew.-%, bezogen auf den Harzanteil, d.h. Harz mit Lösungsmittel.

Der Harzanteil an der Polymerschicht 4 kann ausgewählt sein aus einem Bereich mit einer unteren Grenze von 20 Gew.-% und einer oberen Grenze von 70 Gew.-%, insbesondere aus einem Bereich mit einer unteren Grenze von 30 Gew.-% und einer oberen Grenze von 60 Gew.-%, bspw. aus einem Bereich mit einer unteren Grenze von 40 Gew.-% und einer oberen Grenze von 50 Gew.-%.

Falls erforderlich kann diese Polymerschicht 4 zur Erhöhung der mechanischen Festigkeit weitere Zusätze enthalten, wie bspw. Fasermatrizes und/oder Hartstoffe.

Dieser Zusatzstoff bzw. Hartstoff kann ausgewählt sein aus einer Gruppe umfassend Hartstoffe, wie z.B. CrO₃, Fe₃O₄, PbO, ZnO, CdO, Al₂O₃, SiC, Si₃N₄, SiO₂, MnO, Si₃N₄, Ton, Talk, TiO₂ Aluminiumsilikate, wie z.B. Mullit, Magnesiumsilikate, wie z.B. Amosit, Antophyllit, Chrysotil, spheroidaler Kohlenstoff, Carbide, wie z.B. CaC₂, Mo₂C, WC, Metallpartikel, wie z.B. Zn, Ag, Ba, Bi, Bronze, Cd, Co, Cu, In, Pb, Sn, Tl, Legierungspartikel von diesen Metallen, Blei-Zinn-Legierungspartikel, Lagermetallpartikel auf Pb- oder Sn-Basis, AIN, Fe₃P, Metallboride, wie z.B. Fe₂B, Ni₂B, FeB, BaSO₄, Metallsulfide, wie z.B. Ag₂S, CuS, FeS, FeS₂, Sb₂S₃, PbS, Bi₂S₃, CdS, chlorinierte Hydrogencarbonate, Fluoride, wie z.B. CaF₂, Metallfluoride, wie z.B. PbF₂, Carbofluoride (CFₓ), Metalloxifluoride, Crocidolit, Tremolit, Molybdänthiocarbamate, Silizide, Thiophosphate, wie z.B. Zinkthiophosphat.

Es sind auch Mischungen unterschiedlicher Zusatzstoffe bzw. Hartstoffe, beispielsweise von zwei, drei, vier oder mehreren unterschiedlichen Zusatzstoffen bzw. Hartstoffen verwendbar.

Der Hartstoffanteil kann bis zu 15 Gew.-% betragen.

Als Fasermatrizes können Fasern enthalten sein, ausgewählt aus einer Gruppe umfassend anorganische Fasern, wie z.B. aus Glas, Kohlenstoff, Asbest, Kaliumtitanat, Whisker, wie z.B. SiC, Metallfasern, beispielsweise aus Cu oder Stahl, Filamente mit Hartmetallseele. Durch diese Fasern wird ebenfalls eine Matrixverstärkung erreicht, wobei je nach Anteil der Fasern in der Polymerschicht 4 eine höhere oder niedrigere Matrixfestigkeit erreicht wird.

Der Anteil der Fasern kann bis zu 20 Gew.-%, insbesondere bis zu 15 Gew.-%, beispielsweise bis zu 12 Gew.-%, betragen.

Der im Gleitlack enthaltene Festschmierstoff kann ausgewählt sein aus einer Gruppe umfassen Graphit, Sulfide, wie z.B. MoS₂, SnS, SnS₂, WS₂, ZnS, ZnS₂, weiters hexagonales BN, PTFE, Pb, Pb-Sn-Legierungen, CF₂, PbF₂, etc. Prinzipiell sind diese Festschmierstoffe bereits aus dem Stand der Technik hinlänglich für diesen Verwendungszweck bekannt. Als besonders vorteilhaft für den erfindungsgemäßen Gleitlack bzw. für die erfindungsgemäße Polymerschicht 4 auf dem Lagerelement haben sich die Festschmierstoffe WS₂, Sn, Graphit, SnS und SnS₂, sowie MoS₂ herausgestellt, wobei auch hier wiederum Mischungen von zwei oder mehreren Festschmierstoffen eingesetzt werden können.

Der Anteil des zumindest einen Festschmierstoffes am Gleitlack bezogen auf den Feststoffgehalt bzw. an der Polymerschicht 4 kann ausgewählt sein aus einem Bereich mit einer unteren Grenze von 5 Gew.-% und einer oberen Grenze von 60 Gew.-%, insbesondere aus einem Bereich mit einer unteren Grenze von 10 Gew.-% und einer oberen Grenze von 45 Gew.-%, bspw. aus einem Bereich mit einer unteren Grenze von 12 Gew.-% und einer oberen Grenze von 30 Gew.-%. Bei mehr als einem Festschmierstoff ist die obere Grenze als Summe der Anteile der Festschmierstoffe zu verstehen.

Zur Herstellung des erfindungsgemäßen Gleitlackes können die einzelnen Bestandteile, d.h. das Harz bzw. die Harze mit dem (den) jeweils verwendeten Festschmierstoff(en) und ggf. weiteren Zusatzstoffen, wie den Hartstoffen, miteinander vermischt werden bzw. in ein Lösungsmittel eingetragen werden, um darin vermischt zu werden. Ebenso ist es möglich, dass diese Inhaltsstoffe des Gleitlackes in einem Suspensionsmittel bzw. Emulgiermittel suspendiert bzw. emulgiert werden.

Das Harz selbst kann bereits als fertiges Polymer vorliegen bzw. ist es auch möglich, dass dem Gleitlack lediglich Vorstufen zugesetzt werden, also bspw. die miteinander zu verbindenden Monomere oder Oligomere hiervon, welche in der Folge durch der Entfernung des Lösungsmittels aushärten und damit zum fertigen Polymer polymerisieren bzw. polykondensieren, gegebenenfalls bei erhöhter Temperatur, die bis zu 120 °C betragen kann.

Diesem Gemisch bzw. dieser Lösung können weitere Verarbeitungshilfsmittel wie diese aus der lackverarbeitenden Industrie bekannt sind, beispielsweise Entschäumer Viskositätsregler, etc., aber auch Farbstoffe oder dergleichen zugemengt werden, wobei dies hinlänglich bekannt ist, so dass hierauf nicht besonders Bezug genommen werden muss, insbesondere auch nicht hinsichtlich der relativen Anteile dieser Verarbeitungshilfsmittel am fertigen Lack. Es sei jedoch darauf hingewiesen, dass sich die relativen Anteile des Harzes sowie des Festschmierstoffes und der gegebenenfalls weiteren Zusatzstoffe, z.B. Hartstoffe, zueinander hierdurch nicht verändern.

Der Gleitlack wird bevorzugt nass aufgetragen, beispielsweise durch Sprühen oder durch Streichen. Der Auftrag kann direkt auf ein metallisches Substrat, also beispielsweise die Lagermetallschicht 3, erfolgen. Gegebenenfalls kann vorher ein so genannter Primer aufgetragen werden bzw. ist es möglich, zur Erhöhung der Haftfestigkeit des Gleitlackes auf der Lagermetallschicht 3 vor dem Auftrag des Gleitlackes eine gewissen Oberflächenrauhigkeit zu erzeugen. Auch diese Maßnahmen sind hinlänglich aus dem Stand der Technik bekannt.

Nach dem Auftragen des Gleitlackes auf das Substrat, also beispielsweise die Lagermetallschicht3 des Gleitlagers, oder bei direkten Beschichtungen die Pleuelstange, d. h. das Pleuelauge hiervon, erfolgt eine Aushärtung zur fertigen Polymerschicht 4 unter Verdunstung des Lösungsmittels. Dieses Härtung wird in einer entsprechenden Wärmekammer durchgeführt. Gegebenenfalls kann zur Vernetzung auch eine Anregung mittels UV-Licht, Laserlicht oder Elektronenstrahlen erfolgen, wozu für diesen Fall dem Gleitlack entsprechende Initiatoren, z.B. Fotoinitiatoren, zugesetzt sein können.

Mit dem erfindungsgemäßen Gleitlack wurden folgende Versuchsbeschichtungen durchgeführt.

### Ausführungsbeispiel 1

Es wurde eine Gleitlagerhalbschale dem Stand der Technik entsprechend hergestellt, bestehend aus einer Stahlstützschale sowie einer Lagermetallschicht aus CuPb22Sn2. Auf diesen Verbundwerkstoff wurde in der Folge ein Gleitlack aufgetragen, bestehend aus einem Polyamidimid mit 20 Gew.-% einer Mischung aus SnS und SnS₂, 8 Gew.-% Sn und 10 Gew.-% Graphit.

Bezüglich der Mischung aus SnS und SnS₂ sei hingewiesen, dass der Anteil an SnS an dieser Mischung zwischen 30 Gew.-% und 70 Gew.-% betragen und den Rest SnS₂ bildet.

Dieses Gemisch wurde in N-Methylpyrrolidon als Lösungsmittel suspendiert und homogenisiert. Dieser Gleitlack wurde in der Folge aufgesprüht und getrocknet bzw. thermisch ausgehärtet.

### Ausführungsbeispiel 2

Es wurde im Wesentlichen das Ausführungsbeispiel 1 wiederholt, wobei als Festschmierstof fe 27 Gew.-% WS₂, 2 Gew-% Sn und 23 Gew-% Graphit verwendet wurden.

### Ausführungsbeispiel 3

Dieses Ausführungsbeispiel entspricht im Wesentlichen dem Ausführungsbeispiel 2, wobei der Graphit-Anteil auf 15 Gew-% reduziert wurde.

### Ausführungsbeispiel 4

Dieses Ausführungsbeispiel entspricht im Wesentlichen dem Ausführungsbeispiel 1, wobei als Festschmierstoffe 25 Gew.-% MoS₂ und 12 Gew.-% Graphit verwendet wurden.

Von dem Ausführungsbeispiel 1 bis 4 wurden in der Folge Abriebuntersuchungen durchgeführt. Dazu wurden die Gleitlager auf einer Versuchsvorrichtung zwei Stunden einem Probelauf bei einer dynamischen Belastung bei 98 MPa unterzogen.

Das Ergebnis dieser Versuche ist in Fig. 2 dargestellt. Verglichen wurden die Ausführungen nach der Erfindung einerseits mit einem herkömmlichen, dem Stand der Technik entsprechenden Gleitlack (dargestellt in Balken 1) sowie mit einem Gleitlack entsprechend der AT 501 878 A der Anmelderin (Balken 2), wozu ebenfalls Beschichtungen auf Gleitlagerelementen hergestellt und diese danach den gleichen Versuchsbedingungen unterworfen wurden. Die Ausführungsbeispiele 1 bis 4 sind in dem Balken 3 bis 6 dargestellt.

Es wurden von sämtlichen Proben 4 Durchläufe durchgeführt. Die Balken geben dabei den minimalen und den maximalen erreichten Abriebswert wieder, der als Schichtdickenverlust gemessen wurde. Die hergestellte Schichtdicke entsprach auf diesem Fachgebiet üblichen Schichtdicken für Gleitlagerelmente.

Die erhaltenen Werte wurde anschließend auf 100 % des minimalen Wertes des Standes der Technik Gleitlackes (Balken 1) normiert.

Wie aus dieser Darstellung deutlich ersichtlich ist, kann die Verschleißrate mit dem erfindungsgemäßen Harz entsprechend obigen Ausführungen deutlich reduziert werden.

Mit der erfindungsgemäßen Zusammensetzung für die Polymerschicht 4 ist es möglich, eine Laufschicht mit guten Gleit- und Notlaufeigenschaften, die gegebenenfalls sogar einen Trockenlauf ermöglicht, zu realisieren. Diese zeichnet sich insbesondere durch Wartungsarmut auf. Es ist ein schmierstoffarmer bzw. schmierstofffreier Betrieb möglich. Gebendenfalls lässt sich eine Schmierung durch Wasser erzielen, was insbesondere von Vorteil ist, wenn das erfindungsgemäße Lagerelement 1 z.B. für Pumpen verwendet wird. Neben einer entsprechenden Gewichtsreduzierung ist auch eine geringere Kantenpressungsempfindlichkeit beobachtbar.

Das erfindungsgemäße Lagerelement 1 kann anstelle der Ausbildung als Gleitlagerhalbschale, wie in Fig. 1 dargestellt, auch anderwärtig verwendet werden, beispielsweise als Anlaufring, Gleitbuchse, etc., insbesondere zur Verwendung in der Motorenindustrie. Es sind auch Direktbeschichtungen, z.B. von Pleuelaugen von Pleuelstangen, möglich, wobei in diesem Fall das Stützelement durch die Pleuelstange gebildet wird.

Der erfindungsgemäße Gleitlack kann nicht nur zu Herstellung von Gleitschichten auf den beschriebenen Lagerelementen 1 verwendet werden, sondern kann prinzipiell auf Oberflächen verwendet werden, die tribologischen Beanspruchungen unterliegen, beispielsweise als Einlaufschicht auf Sputtergleitschichten.

Der Ordnung halber sei abschließend darauf hingewiesen, dass zum besseren Verständnis des Aufbaus des Lagerelementes 1 dieses bzw. dessen Bestandteile teilweise unmaßstäblich und/ oder vergrößert und/oder verkleinert dargestellt wurden.

### Bezugszeichenaufstellung

- 1: Lagerelement
- 2: Stützelement
- 3: Lagermetallschicht
- 4: Polymerschicht

## Patentansprüche

1. Gleitlack zur Herstellung einer Beschichtung auf einer tribologisch beanspruchten Fläche, umfassend zumindest ein Polymer, das eine Polymermatrix der Beschichtung bildet, oder zumindest eine Vorstufe des Polymers, die durch Härtung die Polymermatrix bildet, wobei die Molekülstruktur des Polymers oder der zumindest einen Vorstufe eine Hauptkette aus wiederkehrende Monomereinheiten aufweist oder die Vorstufe diese Monomereinheit ist, die einen Teil der Hauptkette darstellt, zumindest einen Festschmierstoff, gegebenenfalls zumindest einen festigkeitssteigemden Zusatzstoff, sowie zumindest ein Lösungsmittel, **dadurch gekennzeichnet, dass** zumindest die Hauptkette der Molekülstruktur oder der Hauptkettenteil ein voll konjugiertes Bindungssystem aufweist.

2. Gleitlack nach Anspruch 1, **dadurch gekennzeichnet, dass** das Polymer oder die Vorstufe zumindest annähernd eine fadenähnliche Molekülstruktur aufweist, mit einer bevorzugten Erstreckung in Längsrichtung.

3. Gleitlack nach Anspruch 1 oder 2, **dadurch gekennzeichnet, dass** das Polymer ausgewählt ist aus einer Gruppe umfassend Polyamide, Polyimide, Polyamidimide.

4. Gleitlack nach einem der Ansprüche 1 bis 3, **dadurch gekennzeichnet, dass** der zumindest eine Festschmierstoff ausgewählt ist aus einer Gruppe umfassend WS₂, MoS₂, Graphit, Sn, SnS, SnS₂.

5. Gleitlack nach Anspruch 4, **dadurch gekennzeichnet, dass** WS₂ in einem Anteil enthalten ist, der ausgewählt ist aus einem Bereich mit einer unteren Grenze von 17 Gew.-% und einer oberen Grenze von 29 Gew.-%, Sn in einem Anteil enthalten ist, der ausgewählt ist aus einem Bereich mit einer unteren Grenze von 2 Gew.-% und einer oberen Grenze von 8 Gew.-% und Graphit in einem Anteil enthalten ist, der ausgewählt ist aus einem Bereich mit einer unteren Grenze von 12 Gew.-% und einer oberen Grenze von 23 Gew.-%, und den Rest das Polymer bildet, jeweils bezogen auf den Feststoffgehalt.

6. Gleitlack nach Anspruch 4, **dadurch gekennzeichnet, dass** eine Mischung aus SnS und SnS₂ in einem Anteil enthalten ist, der ausgewählt ist aus einem Bereich mit einer unteren Grenze von 17 Gew.-% und einer oberen Grenze von 29 Gew.-%, Sn in einem Anteil enthalten ist, der ausgewählt ist aus einem Bereich mit einer unteren Grenze von 2 Gew.-% und einer oberen Grenze von 8 Gew.-% und Graphit in einem Anteil enthalten ist, der ausgewählt ist aus einem Bereich mit einer unteren Grenze von 12 Gew.-% und einer oberen Grenze von 21 Gew.%, und den Rest das Polymer bildet, jeweils bezogen auf den Feststoffgehalt.

7. Gleitlack nach Anspruch 4, **dadurch gekennzeichnet, dass** MoS₂ in einem Anteil enthalten ist, der ausgewählt ist aus einem Bereich mit einer unteren Grenze von 17 Gew.-% und einer oberen Grenze von 29 Gew.-% und Graphit in einem Anteil enthalten ist, der ausgewählt ist aus einem Bereich mit einer unteren Grenze von 12 Gew.-% und einer oberen Grenze von 21 Gew.-%, und den Rest das Polymer bildet, jeweils bezogen auf den Feststoffgehalt.

8. Lagerelement (1) mit einem Stützelement (2) und einer darauf angeordneten Polymerschicht (4), umfassend ein Polymer, zumindest einen Festschmierstoff und gegebenenfalls zumindest einen festigkeitssteigemden Zusatzstoff, wobei das Polymer eine aus Monomereinheiten gebildete Hauptkette aufweist, und wobei zwischen dem Stützelement und der Polymerschicht (4) gegebenenfalls zumindest eine weitere, insbesondere metallische Schicht angeordnet ist, **dadurch gekennzeichnet, dass** zumindest die Hauptkette des Polymers ein voll konjugiertes Bindungssystem aufweist.

9. Lagerelement (1) nach Anspruch 8, **dadurch gekennzeichnet, dass** das Polymer zumindest annähernd eine fadenähnliche Molekülstruktur aufweist, mit einer bevorzugten Erstreckung in Längsrichtung.

10. Lagerelement (1) nach Anspruch 8 oder 9, **dadurch gekennzeichnet, dass** das Polymer ausgewählt ist aus einer Gruppe umfassend Polyamide, Polyimide, Polyamidimide.

11. Lagerelement (1) nach einem der Ansprüche 8 bis 10, **dadurch gekennzeichnet, dass** der zumindest eine Festschmierstoff ausgewählt ist aus einer Gruppe umfassend WS₂, MoS₂, Graphit, Sn, SnS, SnS₂.

12. Lagerelement (1) nach Anspruch 11, **dadurch gekennzeichnet, dass** WS₂ in einem Anteil enthalten ist, der ausgewählt ist aus einem Bereich mit einer unteren Grenze von 17 Gew.-% und einer oberen Grenze von 29 Gew.-%, Sn in einem Anteil enthalten ist, der ausgewählt ist aus einem Bereich mit einer unteren Grenze von 2 Gew.-% und einer oberen Grenze von 8 Gew.-% und Graphit in einem Anteil enthalten ist, der ausgewählt ist aus einem Bereich mit einer unteren Grenze von 12 Gew.-% und einer oberen Grenze von 23 Gew.-%, und den Rest das Polymer bildet, jeweils bezogen auf den Feststoffgehalt.

13. Lagerelement (1) nach Anspruch 11, **dadurch gekennzeichnet, dass** eine Mischung aus SnS und SnS₂ in einem Anteil enthalten ist, der ausgewählt ist aus einem Bereich mit einer unteren Grenze von 17 Gew.-% und einer oberen Grenze von 29 Gew.-%, Sn in einem Anteil enthalten ist, der ausgewählt ist aus einem Bereich mit einer unteren Grenze von 2 Gew.-% und einer oberen Grenze von 8 Gew.-% und Graphit in einem Anteil enthalten ist, der ausgewählt ist aus einem Bereich mit einer unteren Grenze von 12 Gew.-% und einer oberen Grenze von 21 Gew.-%, und den Rest das Polymer bildet, jeweils bezogen auf den Feststoffgehalt.

14. Lagerelement (1) nach Anspruch 11, **dadurch gekennzeichnet, dass** MoS₂ in einem Anteil enthalten ist, der ausgewählt ist aus einem Bereich mit einer unteren Grenze von 17 Gew.-% und einer oberen Grenze von 29 Gew.-% und Graphit in einem Anteil enthalten ist, der ausgewählt ist aus einem Bereich mit einer unteren Grenze von 12 Gew.-% und einer oberen Grenze von 21 Gew.-%, und den Rest das Polymer bildet, jeweils bezogen auf den Feststoffgehalt.

15. Lagerelement (1) nach einem der Ansprüche 8 bis 14, **dadurch gekennzeichnet, dass** die weitere Schicht eine Lagermetallschicht (3) aus einem Bronze- oder Messingwerkstoff ist.
